# EUROPEAN PATENT APPLICATION

(11) **EP 1 736 293 A1**
(43) Date of publication of application: **27.12.2006**
(21) Application number: 05105613.3
(22) Date of filing: 23.06.2005
(51) Int. Cl.: B29C 44/12, B29C 70/78, B29C 70/72, B60N 2/00

(54) **Method for producing a part comprising an isocyanate based element adhered to a thermoplastic element and part produced thereby**

(71) Applicant: Proseat, 1210 Brussels (BE)
(72) Inventor: Heinl, Georg, 64673 Zwingenberg (DE); Pedde, Burkhard, 63486 Bruchköbel (DE); Marenne, Philippe, 65479 Raunheim (DE); Kamprath, Axel, 9230 Wetteren (DE)
(74) Representative: Van Reet, Joseph

(57) **Abstract**

The part, in particular a trim part, comprises at least one first element which is made of an isocyanate based material and at least one second element which is made of a thermoplastic material. The trim part is for example panel-like trim part, such as a dashboard, wherein the second part is a rigid substrate adhered to an elastomeric polyurethane skin or to an intermediate foam layer, or a foam cushion wherein the second part comprises the clips embedded in the foam to attach the covering. The thermoplastic material used for the second element is a polyamide based thermoplastic blend comprising at least one polyamide and at least one further thermoplastic polymer different from polyamide. In this way a good adhesion can be obtained between the isocyanate based material of the first element and the thermoplastic material of the second element. Moreover, compared to polyamide as such, the polyamide based blends do not have to be conditioned.

## Description

The present invention relates to a method for producing a part, in particular a trim part, comprising at least one first element which is made of an isocyanate based material and at least one second element which is made of a thermoplastic material, which method comprises the steps of moulding the first element at least partially against a surface of the second element by applying a reactive mixture for producing the isocyanate based material of the first element against said surface of the second element and by allowing the reactive mixture to cure so that the first and the second elements are adhered to one another by adhesion between the isocyanate based material of the first element and the thermoplastic material of the second element. The invention also relates to a part or in other words an article of manufacture obtained by such a method. The part is more particularly a trim part for automotive vehicles. The trim part may be a foam cushion used in particular as seat or as back rest or it may be a panel-like structure such as a dashboard, a door panel, a console, a glove compartment cover, etc.

The polyurethane (PU) foam cushions of automotive seats usually contain metallic inserts (e.g. wires) for the fixation of textile covers on the seat surface. These metallic inserts are nowadays often replaced by thermoplastic inserts such as strips or clips. These strips or clips are usually made of polyoxymethylene (POM). POM has the disadvantage of not providing an optimal adhesion to the polyurethane foam, resulting in the need of relatively big inserts to withstand the pull-out forces of the textiles. The problem of improving the adhesion between an insert and surrounding foam has been dealt with in a lot of prior art documents including DE 29917372, US 2003213105, JP 6335576, DE 3906200, US 2003001421, FR 2838927, GB 2312836, US 5972465, US 2003215601, US 2003162008, DE 29822649, DE 10025734 and DE 19952416. All known solutions are based on variations in the design of the inserts or on post-treatment of the inserts, such as electric discharges or corona treatment or the use of primers, in order to improve the adhesion with the polyurethane foam. Other methods to improve adhesion use a coating of the inserts with flocks, textile or similar means to increase the surface area between the foam and the insert.

Polyurethane is not only used for foamed cushions but also as overmoulding material over thermoplastic cores or substrates. This technique is used for interior panel-like trim parts for the automotive industry to achieve a homogeneous visual aspect and touch, but also other branches might use this method. The cores or substrates consist of usually those thermoplastics that cope with the requirements of interior parts, such as temperature resistance, ductility, low warpage etc. Very often used is a blend of polycarbonate (PC) and acrylonitrile butadiene styrene copolymer (ABS). However, using this blend as core material, delamination may take place after overmoulding with polyurethane elastomer or foam due to insufficient adhesion of the PU on the PC/ABS surface. Moreover, a PC/ABS blend is also quite expensive. In practice also a polypropylene (PP) substrate can be adhered to the polyurethane foam or elastomeric skin layer but, compared to PC/ABS, the adhesion between PP and polyurethane is even worse. In this respect JP 09011246 describes to roughen the surface of a polypropylene substrate of a dashboard by means of a water jet in order to dispense with the application of the necessary primer on the substrate.

A material which shows a better adhesion to isocyanate based materials such as polyurethane is polyamide. Polyamide has however the disadvantage of being very brittle and dry after injection moulding. In order to create dimensional stability and impact resistance, polyamide parts require a certain moisture content. Moulded polyamide parts have thus to be conditioned before use by allowing them to absorb humidity. This can be done with water or steam. For relatively thick parts, such conditioning takes however quite a lot of time. Moreover, a later change in the moisture content of such parts causes dimensional variations and a reduction of their mechanical properties.

An object of the present invention is therefore to provide a new method and part of the above defined type wherein an alternative thermoplastic material is used which has a better intrinsic adhesion to isocyanate based materials such as polyurethane than POM, PC/ABS or PP and which does not need to be conditioned and is not as sensitive to a varying moisture content as polyamide.

To this end, the method and the part according to the invention are characterised in that the thermoplastic material of which the second element is made, is a polyamide based thermoplastic blend comprising at least one polyamide and at least one further thermoplastic polymer different from polyamide. The further polymer may in particular be ABS or a polyolefin (PO) such as polypropylene (PP).

Looking for an alternative material for the strips or clips in polyurethane foams, the present inventors found that when using a polyamide based thermoplastic blend, consisting of polyamide and of at least one further thermoplastic polymer such as PP or ABS, this polyamide based material provides sufficient stiffness with good intrinsic properties without the need of conditioning. Moreover, it absorbs considerably less moisture than polyamide. Notwithstanding the fact that the further thermoplastic polymer such as for example PP may adhere very badly to PU, the inventors surprisingly found that blends thereof with polyamide have a much better adhesion to PU than POM. As a consequence hereof, inserts based on such a material can be built in in much smaller sizes compared to POM clipses, resulting in advantages for the design, weight and cost. Blends like PA/PP blends have moreover a lower density than POM offering thus a further weight reduction. The polyamide based blends can further be varied in a wide range, e.g. be reinforced by glass or other fibres, by talc or other fillers. They can be coloured by use of pigments etc.

For the panel shaped trim parts (ROM applications: Reaction Overmoulding) wherein the thermoplastic material is used for the substrate layer, it was also found that the adhesion between the polyurethane elastomer skin or the intermediate polyurethane foam backing layer, if used, and the core based on a polyamide based blend, in particular a PA/ABS blend, is much better than with PC/ABS or with PP; no delamination could be observed due to the better compatibility of the polyamide based blend and the PU elastomer or foam.

Other particularities and advantages of the invention will become apparent from the following description of some particular embodiments of the method and the part according to the present invention.

The part or article of manufacture according to the present invention is in particular a trim part, more particularly an interior trim part, for the automotive industry. It may be a foam cushion used for example as seat or seat back or a panel-like trim part such as a dashboard, console, door panel, pillar trim, glove compartment lid, etc. It comprises at least one first element which is made of an isocyanate based material and at least one second element which is made of a thermoplastic material. In the foam cushion the first element is a flexible foam whilst the second element or elements are for example one or more clips or strips used to anchor a cover (textile, artificial or natural leather, etc.) to the foam cushion. In the panel-like trim parts, the second element forms a substrate layer whilst the first element is either an elastomeric skin layer moulded directly against the substrate layer or a flexible or semi-flexible foam layer moulded between an elastomeric skin layer and the substrate layer to provide for a so-called soft touch. In the present specification, the shapes of the first and the second elements will not be described into detail. Instead, reference can be made for example to DE-U-298 22 649 for possible shapes of clips which are embedded in a foam cushion to attach a cover thereto and for example to WO 02/26461 for the production of interior trim parts such as dashboards having an elastomeric skin layer, a rigid substrate layer and an intermediate foam layer produced in situ between the skin layer and the thermoplastic substrate so as to adhere to the skin and the substrate layer.

The first and the second element are adhered to one another by adhesion between the isocyanate based material and the thermoplastic material. As explained hereabove, an object of the invention is to replace the thermoplastic materials which have been used hitherto, by an alternative thermoplastic material which has the properties required for the respective application such as temperature resistance, ductility, low warpage, mechanical strength and impact resistance while providing the required adhesion with the isocyanate based material.

The isocyanate based material may either be a foam, having a density usually lower than 300 kg/m³, or an elastomer having a density which is usually higher than 300 kg/m³. The isocyanate based material of the first element is moulded at least partially against the surface of the second element. It is produced from a reactive mixture which is applied against this surface and allowed to cure to produce the isocyanate based material. This material is preferably a polyurethane material. Different polyurethane formulations are available, in particular formulations for producing flexible or semi-flexible foams (disclosed for example in WO 00/55232 or US 5 718 856) or for producing elastomeric polyurethane (disclosed form example in EP-B-0 379 246 and in EP-B-0 929 586). Moreover, different techniques exist for applying these formulations, such a spraying, pouring, injection (RIM: reaction injection moulding) or overmoulding (ROM: reaction overmoulding) techniques. Since the available polyurethane formulations and application techniques are well-known for a skilled person, they will not be described herein further into detail.

The alternative thermoplastic material used in the parts according to the present invention comprises a polyamide based blend which, compared to POM, PC/ABS and PP, adheres better to PU. The polyamide based blend comprises at least one polyamide and at least one further thermoplastic polymer. This further thermoplastic polymer can be selected from the group consisting of polyolefins (PO), acrylonitrile butadiene styrene copolymer (ABS), poly(phenylene ether) (PPE), polystyrene (PS), polyesters (PEST), polycarbonate (PC), polyvinyls, thermoplastic polyurethane (TPU), polyoxymethylene (POM), polysulfone (PSF), poly(phenyl sulfide) (PPS), poly (vinylidene fluoride) (PVDF), poly(ethyl acrylate) (PEA), polyetherimide (PEI) It has been found that PA/PO blends, in particular PA/PP blends enable to achieve a good adhesion especially to PU foam whilst a PA/ABS blend is especially suited for overmoulding applications with a PU elastomer.

Blends based on polyamide and polyolefin have been described for example in EP 342066, GB 1345747 and in US 6235837, which are all incorporated herein by reference.

The polyolefin may comprise polyethylene, polypropylene, their copolymers, or ethylene/butene copolymers, and the like. Polypropylene homopolymer or copolymer is advantageously employed, for example block or statistical propylene/ethylene copolymers and propylene/butene copolymers. Polypropylene is currently the preferred polyolefin.

The polyolefin may comprise a wholly or partially modified polyolefin. It may be, for example, a polyolefin that has at least one functional group chosen from carboxylic acids, carboxylic esters, acid anhydrides, and epoxy groups, for example the following copolymers: ethylene/alkyl (meth)acrylate, ethylene/alkyl (meth)acrylate/maleic anhydride, ethylene/alkyl (meth)acrylate/glycidyl (meth)acrylate, ethylene/vinyl acetates ethylene/vinyl acetate/maleic anhydride, ethylene/vinyl acetate/glycidyl (meth)acrylate, ethylene/vinyl acetate grafted with maleic anhydride, ethylene/alkyl (meth)acrylate grafted with maleic anhydride, and homo- or copolyolefins optionally grafted with maleic anhydride.

It is also possible to add a compatibilizing agent to the mixture of polyamide and polyolefin since polyamide and polyolefin, especially when unmodified, are not very compatible. Thus, it is possible to have mixtures such as the following: polyamide/polyolefin/ compatibilizing agent, polyamide/modified polyolefin/compatibilizing agent, polyamide/polyolefin/modified polyolefin/compatibilizing agent. The compatibilizing agent may be an alpha-monoolefin graft copolymer, such as maleinized polypropylene grafted with polyamide (PA6, PA11, PA12 oligomer or homopolymer, PA6,6/12 copolymer). These products are described in EP 342066.

Other modified polyolefins with compatibilizing properties may be suitable, in particular: maleinized polypropylene (degree of maleination ≥ 0.5%), statistical polyethylene/polypropylene copolymer (EPR), maleinized (degree of maleination ≥ 0.5%), styrene-ethylene/butylene-styrene (SEBS) block terpolymer, maleinized (degree of maleination ≥ 0.5%), grafted or not with PA6, and ethylene/propylene/diene monomer (EPDM), EPDM (degree of maleination ≥ 0.5%).

The polyamide in the polyamide based blend may be of any type. Preferred polyamides are nylon polyamides such as PA6, PA6,6, PA11 and PA12. PA6 is the most preferred polyamide. The polyamide preferably constitutes the matrix of the blend.

The polyamide based blend preferably comprises, per part by weight of the further polymer, at least 1, preferably at least 2, parts by weight of polyamide (the polyamide based blend thus comprises preferably at least 50 wt% polyamide, any fillers, fibres, or other additives being not included in the weight of the blend). Further, the polyamide based blend comprises preferably, per part by weight of the further polymer, less than 9, more preferably less than 5 parts by weight of polyamide (the polyamide based blend thus comprises preferably at the most 90wt% polyamide). The quantity of optional compatibilizing agent may be between 0 and 15 parts by weight per 100 parts by weight of polyamide and the further polymer.

The present invention also contemplates the addition of additives such as glass or other fibres, flame retardants, antioxidants, shock resistance agents and the like and conventional fillers such as talc to the mixtures employed. These additives are not to be considered as forming part of the polyamide based blend itself.

## Claims

1. A method for producing a part, in particular a trim part, comprising at least one first element which is made of an isocyanate based material and at least one second element which is made of a thermoplastic material, which method comprises the steps of moulding the first element at least partially against a surface of the second element by applying a reactive mixture for producing the isocyanate based material of the first element against said surface of the second element and by allowing the reactive mixture to cure so that the first and the second elements are adhered to one another by adhesion between the isocyanate based material of the first element and the thermoplastic material of the second element, **characterised in that** the thermoplastic material of which the second element is made is a polyamide based thermoplastic blend comprising at least one polyamide and at least one further thermoplastic polymer different from polyamide.

2. A method according to claim 1, **characterised in that** said further thermoplastic polymer comprises at least one thermoplastic polymer selected from the group consisting of polyolefins (PO), acrylonitrile butadiene styrene copolymer (ABS), poly(phenylene ether) (PPE), polystyrene (PS), polyesters.(PEST), polycarbonate (PC), polyvinyls, thermoplastic polyurethane (TPU), polyoxymethylene (POM), polysulfone (PSF), poly(phenyl sulfide) (PPS), poly(vinylidene fluoride) (PVDF), poly(ethyl acrylate) (PEA), polyetherimide (PEI).

3. A method according to claim 1 or 2, **characterised in that** said further thermoplastic polymer comprises at least one polyolefin, preferably polypropylene.

4. A method according to claim 3, **characterised in that** said polyamide based blend comprises a compatibilizing agent.

5. A method according to claim 3 or 4, **characterised in that** said further thermoplastic polymer comprises a modified polyolefin which is compatible with the polyamide.

6. A method according to any one of the claims 1 to 5, **characterised in that** said further thermoplastic polymer comprises at least ABS.

7. A method according to any one of the claims 1 to 6, **characterised in that** said polyamide comprises polyamide 6.

8. A method according to any one of the claims 1 to 7, **characterised in that** the polyamide constitutes the matrix of said polyamide based thermoplastic blend, said blend comprising preferably, per part by weight of said further polymer, at least 1, preferably at least 2, parts by weight of polyamide, and said blend comprising more preferably, per part by weight of said further polymer, less than 9, preferably less than 5 parts by weight of polyamide.

9. A method according to any one of the claims 1 to 8, **characterised in that** said isocyanate based material is a polyurethane material prepared starting from a reactive mixture comprising at least a polyol and an isocyanate component.

10. A method according to any one of the claims 1 to 9, **characterised in that** said isocyanate based material is produced in the form of a foam, in particular a polyurethane foam, having preferably a density lower than 300 kg/m³.

11. A method according to claim 10, **characterised in that** it is produced in the form of a foam cushion wherein said at least one element is embedded, the method comprising the further step of applying a cover onto the surface of the foam cushion and attaching this cover to said at least one second element.

12. A method according to claim 10, **characterised in that** it is produced in the form of a trim part wherein said second element forms a substrate layer, the foam being moulded in the form of an intermediate foam layer between the substrate layer and a surface layer, in particular an elastomeric skin layer.

13. A method according to any one of the claims 1 to 9, **characterised in that** said isocyanate based material is produced in the form of an elastomer, in particular a polyurethane elastomer, having preferably a density higher than 300 kg/m³.

14. A part, in particular a trim part, comprising at least one first element which is made of an isocyanate based material starting from a reactive mixture and at least one second element which is made of a thermoplastic material, the first and the second elements being adhered to one another by adhesion between the isocyanate based material of the first element and the thermoplastic material of the second element, **characterised in that** the part is obtainable by the method according to any one of the claims 1 to 13 and **in that** the thermoplastic material of the second element is a polyamide based thermoplastic blend comprising at least one polyamide and at least one further thermoplastic polymer different from polyamide.
